# EUROPEAN PATENT APPLICATION

(11) **EP 4 466 990 A1**
(43) Date of publication of application: **27.11.2024**
(21) Application number: 24177878.6
(22) Date of filing: 24.05.2024
(51) Int. Cl.: A01K 39/01

(54) **BIRD FEEDER**

(30) Priority: 24.05.2023 GB 202307792
(71) Applicant: Woods, Richard Edwin, Canterbury, Kent CT3 1NL (GB)
(72) Inventor: Woods, Richard Edwin, Canterbury, Kent CT3 1NL (GB)
(74) Representative: Noble, Frederick

(57) **Abstract**

A bird feeder (10) comprising: a body; a food storage area (20) within the body for storing bird food; a first perforated section (30) in a wall of the body for providing access to food contained in the food storage area (20); a second perforated section (32) in the wall of the body, spaced from the first perforated section (30), with no access to the food storage area (20) for use as a perch; and a rain shield (38), the rain shield (38) being positioned to substantially surround and cover the first perforated section (30), and the rain shield (38) extending downwardly and away from the body for preventing birds from landing with their feet on the first perforated section (30).

## Description

The present invention relates to a bird feeder.

### BACKGROUND TO THE INVENTION

Many people enjoy putting out bird food in their gardens to attract wild birds and watch them feed. Feeding can be helpful to increase the survival rates of birds all year round, but it is especially helpful in winter when there is a shortage of food and during the breeding season in spring.

However, the intensive feeding of wild birds and the consequent mixing of different types of bird species feeding from the same bird feeders have led to a significant increase in birds contracting the disease called Trichomonosis. Trichomonosis is a parasitic disease caused by the protozoan parasite *Trichomonas gallinae.* Trichomonosis causes the birds' throats to swell and thereby affects their ability to swallow. As the diseased birds feed, they salivate or regurgitate, which leave behind parasites in the bird feeder ports, which then can come in contact with other birds. The parasites can survive for up to 48 hours in damp food. This causes the disease to be transmitted to healthy birds, which is always fatal.

Trichomonosis has especially affected the UK greenfinch population. Since 2005, their population has collapsed by 70%. Furthermore, Trichonomosis has now also morphed and is dramatically affecting Chaffinches.

Current bird feeders are designed such that they are not very easy to clean, and they do not prevent food contamination and transmission of diseases. The birds are often able to step on their food, thereby leaving faeces or other matter, which can introduce parasites, viruses and bacteria to the food.

In addition, bird food is kept in the bird feeders for long periods of time, for example, weeks or months. Therefore, damp and mould can also develop, which can extend the life of parasites and can encourage fungal growth. Some of the food in the bird feeders is also not easily accessible to birds. This causes older food which is left behind or not eaten by birds to be mixed with fresh food added to the bird feeder.

It is an object of the present invention to reduce or substantially obviate the aforementioned problems.

### STATEMENT OF INVENTION

According to the present invention, there is provided a bird feeder comprising:
a body;
a food storage area within the body for storing bird food;
a first perforated section in a wall of the body for providing access to food contained in the food storage area;
a second perforated section in the wall of the body, spaced from the first perforated section, with no access to the food storage area for use as a perch; and
a rain shield, the rain shield being positioned to substantially surround and cover the first perforated section, and the rain shield extending downwardly and away from the body for preventing birds from landing with their feet on the first perforated section.

Advantageously, this prevents a bird's feet from coming into contact with the food. This prevents the food from being contaminated with, for example, bird faeces or other matter. This thereby reduces the risk of transmission of diseases between birds which feed on the same bird feeder.

The rain shield is able to restrict the birds' wings when they try to perch on the first perforated section. This prevents the birds from gripping onto the first perforated section and instead forces them to perch on the second perforated section, which is further away from the rain shield and where the bird's feet cannot touch the food.

Furthermore, this allows the food in the bird feeder to be kept dry. This prevents damp and/or mould from forming in the food, and further reduces the risk of birds developing diseases.

The food storage area may be a compartment in the body of the bird feeder where bird food such as nuts, seeds, mealworms, rice and cereal can be stored. The part of the body forming the food storage area may be considered a hopper.

The part of the body forming the food storage area may be substantially transparent. This allows the user to see how much food is left in the food storage area, or to see when the feeder is empty and ready for cleaning or topping up with more food.

The body may have a substantially cylindrical shape. This allows the birds to be able to feed all around the periphery of the bird feeder.

However, in other embodiments, the body may have any suitable shape.

The length of the body may be considered the height of the bird feeder.

The body may have a length of around 200-250 mm. The body may have a diameter or width of around 90-140 mm.

The food storage area may have a length of around 70-120 mm.

The relatively small size of the bird feeder allows the feeder to be emptied quicker, for example, within a few days or within a week. This prevents food from being held within the feeder for very long periods of time. This further reduces the risk of damp and/or mould forming in the food.

The food storage area may be substantially located within an upper section of the body.

The second perforated section may be substantially disposed at a lower section of the body.

The first perforated section may be disposed between the upper section and the lower section of the body. In other words, the food storage area may be located above the first perforated section, and the second perforated section may be disposed below the first perforated section.

The position of the first perforated section being directly below the food storage area allows the food from the food storage area to drop within the first perforated section where the food can be accessed by the birds.

The first perforated section may have a length of around 30-50 mm. The second perforated section may have a length of around 30-50 mm. This provides enough space for the birds to access food or perch on the bird feeder.

The rain shield may be positioned directly adjacent the first perforated section, for example, disposed adjacent the upper end of the first perforated section.

The rain shield may be connected to a part of the body disposed above the first perforated section.

This allows the food accessible from the first perforated section to be kept dry and protected from weather such as rain. Furthermore, the proximity of the rain shield to the first perforated section restricts the birds' wings when they try to perch on the first perforated section. This thereby prevents the birds from perching or gripping onto the first perforated section, and prevents their feet from coming into contact and contaminating the food.

The rain shield may have a substantially conical shape. However, the shape of the rain shield may vary depending on the shape of the body of the bird feeder. This allows the shape of the rain shield to complement the shape of the body.

The rain shield may have a slant height of around 60-90 mm. The slant height of the rain shield may extend from the top to the base rim of the rain shield.

The rain shield may extend away from the body of the bird feeder at an angle of around 20°-70° from a horizontal plane of the bird feeder.

The horizontal extension of the rain shield from the body of the bird feeder may be around 40-80 mm. The horizontal extension of the rain shield may be calculated as the difference between the top radius length and the base radius length of the rain shield.

This allows the rain shield to substantially fully surround and protect the first perforated section. For example, this prevents rain water from getting the food wet and reduces the possibility of materials such as dirt or debris from being blown into the first perforated section and mixing with the food.

The downward extension of the rain shield may terminate above or before the second perforated section. This allows the birds to perch on the second perforated section below where they can access the food and feed in an upright position, where their wings are not restricted by the rain shield.

The second perforated section may be spaced from the first perforated section by a first unperforated section. This further ensures that the second perforated section is separated from the first perforated section so that the birds do not grip onto the first perforated section and contaminate the food.

The first unperforated section may have a length of around 25-40 mm, which extends between the first and second perforated sections.

Apertures of the first perforated section may each have a diameter, width or length of around 3-7 mm. The size of the apertures of the first perforated section prevents the food from falling out of the feeder, while providing birds good access to the food. The relatively small size of the apertures also helps to further prevent the birds from gripping onto the first perforated section.

Apertures of the second perforated section may each be an elongate aperture.

The apertures of the second perforated section may each have a length of around 12-20 mm. The apertures of the second perforated section may each have a width of around 3-10 mm.

The size and shape of the apertures of the second perforated section ensures that birds of different sizes can comfortably grip onto the second perforated section to perch on the bird feeder.

A removable lid or cover may be provided for removably attaching to the body of the bird feeder.

The removable lid may be made from waterproof material, for example, plastics or metals.

The removable lid may be provided on an upper open end of the body of the feeder.

The upper open end of the body allows the bird food to be supplied from the top of the bird feeder.

The removable lid provides cover and protection to the food stored in the food storage area and allows the user to easily supply the bird feeder with food.

The removable lid may have a screw-threaded connection with the body. This allows the lid to be easily attached or detached from the bird feeder.

Distributing means may be provided within the body of the bird feeder for distributing the food from the food storage area to within the first perforated section.

The distributing means may comprise a main section.

The main section may have a substantially conical shape. The distributing means may be provided as a substantially upside-down cone. However, the shape of the distributing means may vary depending on the shape of the body of the bird feeder.

The main section of the distributing means may have a length of around 80-120 mm.

A part or the whole of the main section of the distributing means may be disposed within the first perforated section.

The distributing means allows the food to be distributed from the food storage area to the sides of the first perforated section, in close proximity to the apertures of the first perforated section. This forms a tube of food against the first perforated section and allows food to be consumed by age order. This means that older food is distributed within the first perforated section where they can be eaten by birds first before they are replaced by newer food.

This thereby prevents the food from being stuck and untouched at the centre of the bird feeder. This helps prevent damp and/or mould from forming in the food and helps prevent birds from transmitting or developing diseases.

The main section of the distributing means may comprise a first portion, a second portion and a third portion.

The first portion may be a vertex portion of the distributing means.

The first portion may include the tip or vertex of the main section of the distributing means. The first portion may gradually widen in diameter from the tip.

The first portion allows the food to be distributed from the food storage area to within the first perforated section.

In some embodiments, the first portion may be provided at an upper end or upper portion of the first perforated section.

In some embodiments, the first portion may be disposed in the food storage area.

In some embodiments, part of the first portion may be disposed in the food storage area and another part may be disposed within the first perforated section.

The second portion may be a central portion of the distributing means.

The second portion may be substantially disposed within the first perforated section.

The first portion and the second portion may be spaced away from the wall of the body of the bird feeder.

The diameter of the first portion, i.e., the diameter from the tip to the base of the first portion, may be smaller than the diameter of the body of the bird feeder.

The second portion may effectively be a concentric tube and have a diameter smaller than the diameter of the body of the bird feeder.

The second portion may be spaced away from the wall of the first perforated section or the wall of the body of the bird feeder by around 7-20 mm.

This allows around up to two peanuts to fill the gap or space between the second portion and the first perforated section.

The second portion allows the food to be provided in an area directly next to the apertures of the first perforated section i.e., forming a tube of food against the first perforated section. This prevents the accumulation of the food in the centre of the bird feeder, which is not accessible to birds. This ensures that all of the food within the first perforated section is easily accessible to birds.

The third portion may be a base portion of the distributing means.

The third portion may extend in a direction substantially perpendicular or diagonal to the length of the body. The third portion may be a circumferential flange.

An end of the third portion may abut the wall of the body.

In some embodiments, the end of the third portion may abut a lower end of the first perforated section i.e., immediately below the apertures of the first perforated section.

In some embodiments, the end of the third portion may abut the first unperforated section disposed between the first perforated section and the second perforated section.

The third portion may be configured to form a tray for holding the food within the first perforated section and/or the food storage area. This allows the food within the first perforated section to filter down above the third portion.

The distributing means may be slidably insertable and/or removable from within the body of the bird feeder.

The distributing means may be slidably insertable and/or removable from within the body of the bird feeder, through the upper open end of the body.

This allows the distributing means and the body of the bird feeder to be easily cleaned, thus reducing the risk of transmission of diseases in birds.

A flange or shoulder may be provided at the upper section of the body of the bird feeder.

The flange or shoulder may be provided on an inner surface or wall of the body of the bird feeder.

The distributing means may include a retaining member.

The retaining member may be configured to sit on the flange or shoulder of the body of the bird feeder. This allows the distributing means to be held in a fixed position within the body of the bird feeder.

The retaining member may be held or sandwiched between the removable lid and the flange or shoulder of the body. This ensures that the retaining member and thus the distributing means does not move out of its position within the body of the bird feeder.

The retaining member may be connected to the first portion of the main section of the distributing means.

In some embodiments, the retaining member may be connected to the first portion by being inserted through the tip of the first portion or hence the tip of the main section of the distributing means.

A seal, for example, a rubber seal may be provided between the removable lid and the retaining member. This provides the bird feeder with a tight seal and ensures that the removable lid is securely attached to the body of the feeder. It also ensures that the retaining member is securely held between the removable lid and the flange or shoulder of the body.

In some embodiments, the body of the bird feeder may comprise a first part and a second part connectable to each other.

The first part may be considered an upper part of the bird feeder and the second part may be considered a lower part of the bird feeder.

A lower end of the first part may be connected to an upper end of the second part of the body.

The upper end of the second part of the body may be insertable within the lower end of the first part of the body.

The food storage area may be provided within the first part of the body of the bird feeder.

The first part may be substantially transparent. This allows the user to see how much food is left in the food storage area, or to see when the feeder is empty and ready for cleaning or topping up with more food.

However, in some embodiments, the first part may be substantially opaque.

The first part may be made from plastics or metals.

The first perforated section, the second perforated section, and the first unperforated section may form part of the second part of the body of the bird feeder.

The first perforated section, the second perforated section and the first unperforated section may be integrally formed as a single unit. This allows the second part of the body to be made from one material, for example, metals.

The rain shield may be provided on the first part of the body of the bird feeder.

The rain shield may be integrally formed as part of the first part of the body.

The rain shield may be made from the same material as the first part of the body.

The rain shield may be transparent. This allows the user to see the birds feeding from the first perforated section of the bird feeder.

The rain shield may be disposed at a lower section of the first part of the body.

The rain shield may be spaced away from a lower end of the first part of the body.

The removable lid may be provided on an upper open end of the first part of the body.

The first perforated section may be the portion of the second part connectable to the first part of the body.

In some embodiments, the second part of the body may include a second unperforated section.

The second unperforated section may be provided above the first perforated section.

The second unperforated section may be the portion of the second part connectable to the first part of the body.

The second unperforated section may have a length of around 30-60 mm.

The connection of the second part to the first part of the body allows the food contained in the food storage area of the first part to drop and be distributed within the first perforated section, where the food can be accessed by birds.

One or more lugs may be provided on the first part or second part of the body. The one or more lugs may be provided on an inner or outer surface of the first part or second part of the body.

One or more recesses or apertures may be provided in the first part or second part of the body for receiving the corresponding one or more lugs.

The one or more lugs and the one or more recesses or apertures form a secure fit between the first and second parts of the body and allow them to be securely held together.

Alternatively, or in addition, the first part and the second part of the body may be bonded to each other, for example, using adhesives. This allows the first part and the second part to be securely fixed to each other.

In some embodiments, the second part of the body may include a third unperforated section.

The third unperforated section may be provided below the second perforated section.

A ring cover may be provided around the third unperforated section. This provides protection for the bottom of the bird feeder, for example, when placing the bird feeder on the ground or when in storage.

One or more lugs may be provided on the ring cover or third unperforated section. The one or more lugs may be provided on an inner or outer surface of the ring cover or the third unperforated section.

One or more recesses or apertures may be provided in the ring cover or third unperforated section for receiving the corresponding one or more lugs.

The one or more lugs and the one or more recesses or apertures allow the ring cover and the third unperforated section to be connected to each other.

The first perforated section, second perforated section, first unperforated section, second unperforated section and third unperforated section may be integrally formed as a single unit.

The removable lid may include one or more protrusions for providing grip and leverage to a user, in use. This provides the bird feeder with an area to which the user can hold onto when removing and/or attaching the removable lid to the body of the bird feeder.

The body of the bird feeder may include one or more protrusions for providing grip and leverage to a user, in use. This further helps with easy removal and/or attachment of the removable lid from the body of the bird feeder.

In some embodiments, the first part of the body may include the one or more protrusions.

### BRIEF DESCRIPTION OF THE DRAWINGS

For a better understanding of the present invention, and to show more clearly how it may be carried into effect, reference will now be made by way of example only to the accompanying drawings, in which:
Figure 1 shows a perspective top view of a bird feeder;
Figure 2 shows a perspective bottom view of the bird feeder of Figure 1;
Figure 3 shows a perspective cross-sectional view of the bird feeder of Figures 1 and 2;
Figure 4 shows a side cross-sectional view of the bird feeder of Figures 1 to 3; and
Figure 5 shows an exploded view of the bird feeder of Figures 1 to 4.

### DESCRIPTION OF PREFERRED EMBODIMENTS

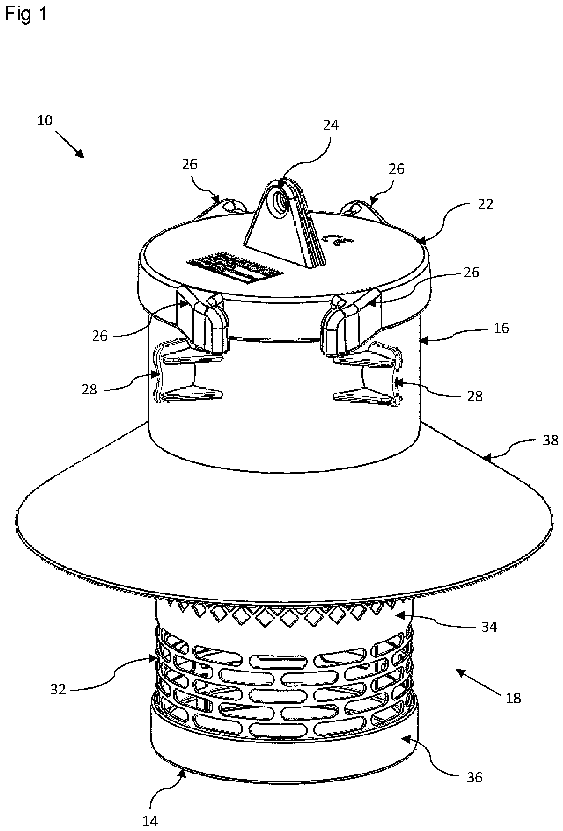

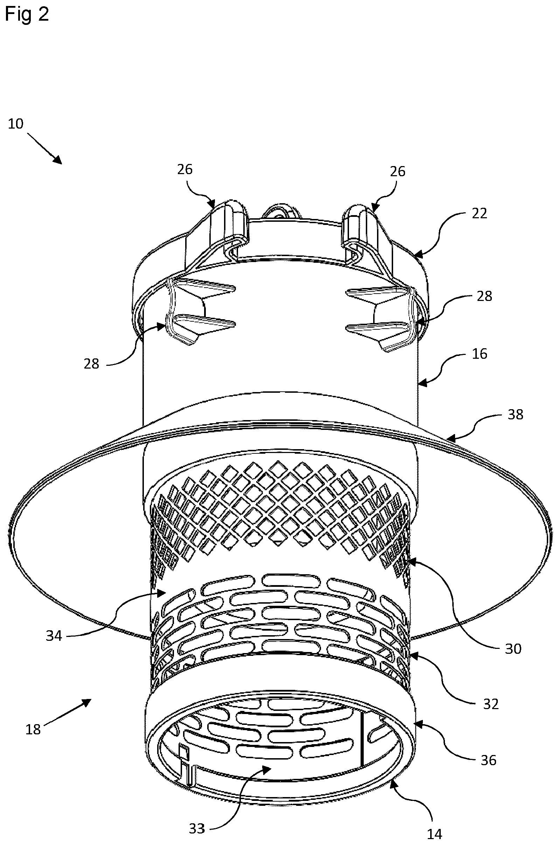

Referring to Figures 1 to 5, a bird feeder is generally indicated at 10. The bird feeder 10 comprises a body. The body is a substantially hollow, cylindrical wall or structure having a first open end 12 and a second open end 14.

In this embodiment, the body comprises a first part 16 and a second part 18 connected to each other.

A food storage area 20 is provided within the first part 16 of the body. The food storage area 20 is a hopper, where bird food, for example, nuts, seeds, mealworms, rice and cereals can be stored in the bird feeder 10.

In this embodiment, the first part 16 of the body is transparent i.e., made from plastics. This allows a user to be able to see how much food is left in the food storage area 20. This makes it easier to see when the bird feeder 10 is ready for cleaning or when it is ready to be topped up with more food. The user does not need to open the food storage area 20 to find out how much food is left in the bird feeder 10.

An upper end of the first part 16 of the body forms the first open end 12 of the body.

Bird food is supplied to the food storage means 20 through the first upper open end 12 of the body. The food flows downward a distributor, which is described further below.

A removable lid 22 is provided for covering the first open end 12 of the body. The lid 22 can be made from plastics or metals.

The lid 22 has a circular shape, which complements the shape of the first open end 12. This provides protection and cover to the food storage area 20 and prevents the food from getting wet or mixing with dirt or debris which may fall through the first open end 12 of the body.

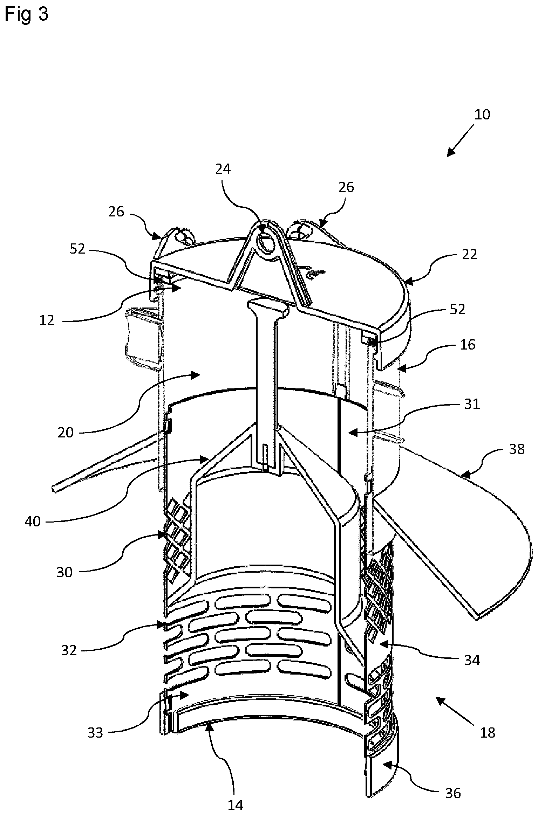

The removable lid 22 has a screw-thread connection with an upper edge of the first part 16 of the body, where an inner screw thread of the lid 22 mates with an outer screw thread of the upper edge of the first part 16, as can be more clearly seen in Figures 3 to 5. This provides a secure and tight connection between the lid 22 and the body of the bird feeder 10.

The removable lid 22 includes an eye 24 extending from a centre of the lid 22. This allows the bird feeder 10 to be hung or fastened to a structure, for example, a structure in the user's garden.

The removable lid 22 includes protrusions 26 for providing grip and leverage to the user when opening or closing the lid 22.

In this embodiment, four protrusions 26 which extend horizontally away from a side of the lid 22 are provided.

Each protrusion 26 of the lid 22 has a substantially arcuate shape.

Two protrusions 26 are provided on one side of the lid 22, which curve towards each other. Another two protrusions 26 are provided on the opposite side of the lid 22 and mirror the opposite protrusions 26.

The first part 16 of the body also includes protrusions 28 for providing grip and leverage to the user. This further aids with the opening or closing of the removable lid 22.

Two protrusions 28 are provided below the first set of protrusions 26 of the lid 22, and another two protrusions 28 are provided below the second set of protrusions 26 of the lid 22.

Each protrusion 28 of the first part 16 has a substantially S-shaped portion, and an arm extending from each end of the substantially S-shaped portion.

The protrusions 28 from each set face or mirror each other, similar to the protrusions 26 of the lid.

In this embodiment, the arms of a first protrusion 28 face the arms of a second protrusion 28.

A first perforated section 30 is provided in the wall of the second part 18 of the body for providing birds access to the bird food.

A second perforated section 32 is provided in the wall of the second part 18 of the body, below the first perforated section 30, for acting as a perch on which the birds can alight or roost on the bird feeder 10.

The first perforated section 30 substantially forms part of an upper portion of the second part 18 of the body and the second perforated section 32 substantially forms part of a lower portion of the second part 18 of the body.

The first 30 and second 32 perforated sections are made of a plurality of apertures. The apertures extend substantially around the cylindrical wall of the first 30 and second 32 perforated sections. This allows the birds to feed and perch all around the periphery of the bird feeder 10.

An upper unperforated section 31 is provided above the first perforated section 30.

The upper unperforated section 31 is inserted in an open lower end of the first part 16 of the body for connecting the first part 16 to the second part 18 of the body.

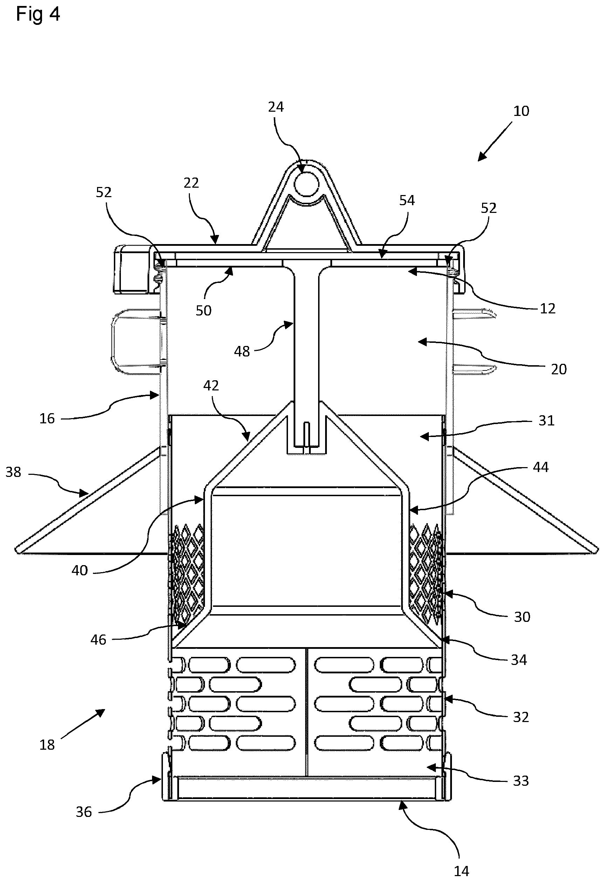

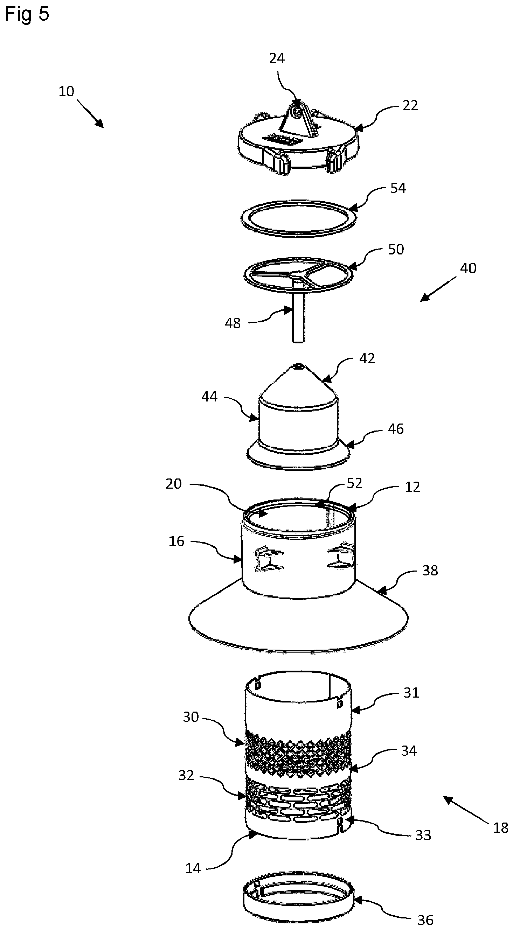

In this embodiment, two lugs positioned opposite each other are provided on an inner surface of the first part 16 of the body, and two apertures for receiving the lugs are provided in the upper unperforated section 31 of the second part 18 to fix the first part 16 and the second part 18 to each other, as can be seen in Figures 4 and 5.

The apertures of the first perforated section 30 are positioned below the connection of the first part 16 of the body to the upper unperforated section 31.

The position of the first perforated section 30 in relation to the first part 16 of the body or the food storage area 20 allows the food to drop from the food storage area 20 to within the first perforated section 30, where the birds can access the food through the apertures of the first perforated section 30.

The apertures of the first perforated section 30 have a substantially square or diamond shape.

The apertures of the first perforated section 30 can each have a length and/or width of around 3-7 mm.

The size of the apertures of the first perforated section 30 ensures that the food in the first perforated section 30 does not fall out of the apertures thereby reducing waste whilst still being able to provide good access to food for birds. Furthermore, the relatively small size of the apertures of the first perforated section 30 reduces the likelihood that the birds' feet can come into contact with the food.

The second perforated section 32 is spaced from the first perforated section 30 by a central unperforated section 34.

The separation between the first 30 and second 32 perforated sections prevents the birds from being able to access the food from the second perforated section 32. It also further prevents the birds from gripping onto the first perforated section 30 and having their feet come into contact with the food.

The second part 18 of the body can be made from metals.

The second part 18 of the body can be made from sheet metal. Ends of the sheet metal are connected to each other to form the cylindrical shape of the second part 18.

Apertures in the second part 18 such as apertures of the first 30 and second 32 perforated section may be pushed out before connecting the ends of the sheet metal for forming the cylindrical shape of the second part 18.

The apertures of the second perforated section 32 are elongate apertures having a substantially rectangular or oblong shape.

The apertures of the second perforated section 32 can have a length of around 12-20 mm and a width of around 3-10 mm.

The size of the apertures of the second perforated section 32 allows different birds of different sizes to comfortably alight or roost on the bird feeder 10.

A lower unperforated section 33 is provided below the second perforated section 32. A lower end of the lower unperforated section 33 forms the second open end 14 of the body.

A ring cover 36 is provided around the lower unperforated section 33 or the second open end 14 of the body.

Two lugs positioned opposite each other are provided on an inner surface of the ring cover 36, and two apertures for receiving the lugs are provided in the lower unperforated section 33 of the second part 18 of the body to attach the ring cover 36 and the second part 18 to each other.

The ring cover can be made from plastics.

The first perforated section 30, second perforated section 32, upper unperforated section 31, central unperforated section 34 and lower unperforated section 33 all form part of the second part 18 of the body, and are integrally formed together as a single unit thereby forming a one piece second part 18.

Overall, the food storage area 20 substantially forms part of an upper section of the body of the bird feeder 10, the first perforated section 30 substantially forms part of a central section of the body of the bird feeder 10, and the second perforated section 32 substantially forms part of a lower section of the body of the bird feeder 10.

A rain shield 38 is connected to the lower section of the first part 16 of the body, but spaced away from the lower end of the body.

The rain shield 38 is positioned adjacent the first perforated section 30.

The position of the rain shield 38 in relation to the first perforated section 30 restricts the birds' wings when they try to perch on the first perforated section 30. This therefore prevents the birds from perching or gripping onto the first perforated section 30 when feeding. This prevents the birds' feet from coming into contact with the food.

The rain shield 38 has a substantially conical shape, and extends substantially downwardly and away from the body of the bird feeder 10.

In this embodiment, the rain shield 38 substantially extends down part of the length of the first perforated section 30.

This allows the rain shield 38 to substantially surround and provide cover to the first perforated section 30. This prevents water such as rain from getting into the first perforated section 30 and prevents dirt and debris from being blown into the first perforated section 30. This helps to keep the food clean and dry.

In addition, this allows the birds to perch on the second perforated section 32, positioned below the first perforated section 30, and feed in an upright position.

The rain shield 38 is integrally formed as part of the first part 16 of the body. This ensures that the rain shield 38 can always provide protection to the first perforated section 30.

The rain shield 38 is transparent. This allows the user to be able to see the birds feeding from the first perforated section 30.

Distributing means 40 is provided within the body of the bird feeder 10. The distributing means 40 allows the food stored within the food storage area 20 to be distributed within an area next to, in very close proximity, to the apertures of the first perforated section 30. This prevents food from being held in the centre of the first perforated section 30, which is inaccessible to birds. This prevents food from being stuck in the centre of the feeder 10 and prevents damp and/or mould from growing in the food.

The distributing means 40 has a main section with a substantially conical shape. The main section of the distributing means 40 is provided substantially within the first perforated section 30 as a substantially upside-down cone.

The main section of the distributing means 40 has a vertex portion 42, a central portion 44 and a base portion 46.

The vertex portion 42 includes the tip or vertex of the main section i.e., the point of the cone. The vertex portion 42 widens in diameter from the tip to the base of the vertex portion 42.

In this embodiment, the vertex portion 42 is disposed substantially within the lower end of the first part 16 and within the upper unperforated section 31.

The vertex portion 42 allows the food in the food storage means to be distributed within the first perforated section 30 disposed below the first part 16.

The central portion 44 is disposed substantially within the first perforated section 30.

The central portion 44 has a substantially cylindrical shape.

The central portion 44 has a smaller diameter than the body of the bird feeder. This provides a circumferential space for the bird food.

The central portion 44 allows the distributing means 40 to evenly or uniformly spread the food next to the apertures of the first perforated section 30 thereby forming a tube of food against the first perforated section 30.

The base portion 46 extends from an end of the central portion 44 towards the central unperforated section 34, where the base portion 46 abuts the inner wall or surface of the central unperforated section 34 disposed between the first perforated section 30 and the second perforated section 32.

The base portion 46 is a circumferential flange.

The base portion 46 extends substantially outwardly and downwardly from the end of the central portion 44 to the central unperforated section 34, as can be seen in Figures 3 to 5. This allows the base section 46 to act as a tray for holding food within the food storage area 20 and the first perforated section 30, and for preventing access to food from the second perforated section 32. This allows the food to filter down so that older food drops down to the bottom of the first perforated section 30.

The distributing means 40 includes a retaining member. The retaining member allows the distributing means 40 to be held within the body of the bird feeder 10.

The retaining member includes a stem 48 and a retaining ring 50.

A first end of the stem 48 is connected to the vertex portion 42 by inserting through the tip of the vertex portion 42 of the distributing means 40. The stem 48 extends from the lower end of the first part 16 to the first open end 12 of the body.

The retaining ring 50 is connected to a second end of the stem 48. Three elongate members extend radially and perpendicularly away from the second end of the stem 48 and connect the retaining ring 50 to the second end of the stem 48.

The first part 16 of the body includes a shoulder 52 on an inner surface at the upper section of the first part 16, next to the first open end 12.

The retaining ring 50 of the distributing means 40 sits on the shoulder 52 and is positioned between the shoulder 52 and the removable lid 22. This allows the distributing means 40 to be held in a fixed and predetermined position substantially within the first perforated section 30.

A seal 54 is provided between the retaining ring 50 of the distributing means 40 and the removable lid 22. This allows the lid 22 to be securely fastened to the first part 16 of the body and provides a tight seal.

The distributing means 40 is slidably removable from the bird feeder 10 through the first open end 12 of the body. This allows the body of the bird feeder 10 and the distributing means 40 to be easily cleaned.

The body of the bird feeder can have a diameter of 90-140 mm. The food storage area can have a length of 80-130 mm.

The food storage area 20 is sized so that approximately only a few days or up to one weeks' worth of bird food can be stored. This allows the bird feeder 10 to be emptied quicker preventing food from being kept in the feeder for very long periods of time. This reduces the risk of damp and/or mould from forming in the food or feeder 10.

Overall, the arrangement of the bird feeder 10 prevents the birds' feet from coming into contact with the food by preventing the birds from perching on the first perforated section and instead forcing them to perch on the second perforated section 32 below the first perforated section 30 so that they can feed in an upright position. Furthermore, the bird feeder 10 allows the food to be kept dry whilst ensuring that food does not accumulate at the centre of the feeder 10 where it is inaccessible to birds. This prevents damp and/or mould growth in the food stored in the bird feeder 10 and also reduces the risk of transmission of diseases between birds.

The embodiments described above are provided by way of example only, and various changes and modifications will be apparent to persons skilled in the art without departing from the scope of the present invention as defined by the appended claims.

## Claims

1. A bird feeder comprising:
a body;
a food storage area within the body for storing bird food;
a first perforated section in a wall of the body for providing access to food contained in the food storage area;
a second perforated section in the wall of the body, spaced from the first perforated section, with no access to the food storage area for use as a perch; and
a rain shield, the rain shield being positioned to substantially surround and cover the first perforated section, and the rain shield extending downwardly and away from the body for preventing birds from landing with their feet on the first perforated section.

2. A bird feeder as claimed in claim 1, in which the second perforated section is spaced from the first perforated section by an unperforated section, and optionally in which the first perforated section, second perforated section and unperforated section are integrally formed as a single unit.

3. A bird feeder as claimed in claim 1 or claim 2, in which the rain shield is positioned above and directly adjacent the first perforated section, and optionally in which the rain shield has a substantially conical shape.

4. A bird feeder as claimed in any preceding claim, in which the downward extension of the rain shield terminates above or before the second perforated section.

5. A bird feeder as claimed in any preceding claim, in which the body comprises a first part and a second part connectable to each other, optionally in which the first part and the second part of the body are bonded to each other, and optionally in which the food storage area is provided within the first part of the body, and the first and second perforated sections form part of the second part of the body.

6. A bird feeder as claimed in any preceding claim, in which distributing means is substantially disposed within the first perforated section for distributing the food next to apertures of the first perforated section, and optionally in which the distributing means is slidably removable from the body of the bird feeder.

7. A bird feeder as claimed in claim 6, in which the distributing means has a main section with a substantially conical shape, the main section having a first portion being a vertex portion of the main section, a second portion being a central portion of the main section and a third portion being a base portion of the main section.

8. A bird feeder as claimed in claim 7, in which the first portion and the second portion of the main section of the distributing means is spaced away from the wall of the body, and optionally in which the second portion of the main section of the distributing means is spaced away from the wall of the body by around 7-20 mm.

9. A bird feeder as claimed in claim 7 or claim 8, when dependent on claim 2, in which an end of the third portion of the main section of the distributing means abuts the unperforated section.

10. A bird feeder as claimed in any of claims 6 to 9, in which the distributing means includes a retaining member, and optionally in which the retaining member sits on a flange or shoulder provided on the body for holding the position of the distributing means substantially within the first perforated section.

11. A bird feeder as claimed in claim 10, in which in a removable lid or cover is provided for removably attaching to the body, and optionally in which the retaining member is sandwiched between the removable lid and the flange or shoulder of the body.

12. A bird feeder as claimed in any of claims 5 to 11, in which an upper end of the second part of the body is inserted in a lower end of the first part of the body.

13. A bird feeder as claimed in any of claims 5 to 12, in which one or more lugs are provided on the first part or second part of the body, and one or more recesses or apertures are provided in the other of the first part or second part of the body for receiving the corresponding lugs.

14. A bird feeder as claimed in any of claims 5 to 13, in which the rain shield is provided on the first part of the body.

15. A bird feeder as claimed in any preceding claim, in which apertures of the first perforated section have a diameter or length of around 3-7 mm, and/or apertures of the second perforated section have a length of around 12-20 mm and/or a width of around 3-10 mm.
